# EUROPEAN PATENT APPLICATION

(11) **EP 2 317 353 A1**
(43) Date of publication of application: **04.05.2011**
(21) Application number: 10161218.2
(22) Date of filing: 27.04.2010
(51) Int. Cl.: G02B 6/00, F21V 8/00

(54) **Backlight unit and display apparatus having the same**

(30) Priority: 02.11.2009 KR 20090104863
(71) Applicant: Samsung Electronics Co., Ltd., Gyeonggi-do 442-742 (KR)
(72) Inventor: Park, Jung-jin, Seongnam-si (KR); Seong, Ki-bum, Anyang-si (KR); Choi, Nak-won, Incheon (KR); Yun, Sang-un, Seoul (KR)
(74) Representative: Waddington, Richard

(57) **Abstract**

Disclosed is a display apparatus. The display apparatus includes: an image receiver configured to receive an image signal; an image processor configured to process the image signal received by the image receiver; a display panel configured to display an image based on the image signal processed by the image processor; a plurality of light guide plates configured to output light to corresponding display regions of the display panel; and a light source module configured to generate the light toward side surfaces of the light guide plates, wherein the light source module includes a plurality of light sources, coupled to the side surfaces of the light guide plates, to generate and transmit the light toward the respective light guide plates at corresponding positions of the side surfaces of the light guide plates which are changed from prior positions according to bends of the light guide plates.

## Description

### BACKGROUND

### 1. Field

Apparatuses and methods consistent with exemplary embodiments relate to displaying an image by using a light source and a light guide plate, and more particularly, to preventing light leakage and/or a local brightness deterioration in a display apparatus.

### 2. Description of the Related Art

A display apparatus including a display panel, such as, for example, a television (TV) and a monitor, may display an image based on a broadcasting signal or various formats of image data. Such a display panel may include various types of liquid crystal panels or plasma panels, for example, to be installed in various types of display apparatuses. When a display panel such as the liquid crystal panel, cannot generate light, it is provided with a backlight unit for providing light to the display panel in a display apparatus.

Recently, an environmentally friendly light-emitting diodes (LEDs) having a high response speed, have been more popular than a related art cold cathode fluorescent lamp (CCFL) as a light source for the backlight unit in the display apparatus. The backlight unit may be classified into an edge type and a rear type according to the position of the light source.

In the rear type backlight unit, a light source is arranged in parallel with a rear surface of a light guide plate to directly transmit light to a display panel. In the edge type backlight unit, a light source is arranged in a bar formed along an edge of a light guide plate to inject light into a display panel through the light guide plate. Since the light source is arranged along the edge of the backlight unit, the edge type backlight unit is easier to use in a slim display apparatus than the rear type backlight unit. Accordingly, the edge type backlight unit has been more popular for the slim display apparatus.

However, the light source may generate heat which may cause the deformation of the light guide plate and, in turn, may cause the leakage of light.

### SUMMARY

Exemplary embodiments may address at least the above problems and/or disadvantages and other disadvantages not described above. Also, exemplary embodiments are not required to overcome the disadvantages described above, and an exemplary embodiment may not overcome any of the problems described above.

According to the present invention there is provided an apparatus and method as set forth in the appended claims. Other features of the invention will be apparent from the dependent claims, and the description which follows.

Exemplary embodiments provide a display apparatus including: an image receiver configured to receive an image signal; an image processor configured to process the image signal received by the image receiver; a display panel configured to display an image based on the image signal processed by the image processor; a plurality of light guide plates configured to output a light to each divided display region of the display panel; and a light source module configured to generate the light toward side surfaces of the respective light guide plates, wherein the light source module includes a plurality of light sources, coupled to the side surfaces of the light guide plates, to generate lights toward the respective light guide plates to correspond to positions of the side surfaces of the light guide plates which are changed according to bends of the light guide plates.

The light source module may include a module board on which the light sources arranged in serial along the side surfaces of the light guide plates are mounted.

The module board may have a flexible material to be bendable to correspond to the positions of the light sources changed according to the bends of the light guide plates.

The light sources may adhere to the side surfaces of the light guide plates.

The light sources may include light-emitting diodes.

According to an aspect of an exemplary embodiment, there is provided a backlight unit for supplying a light to a display panel, the backlight unit including: a plurality of light guide plates configured to output a light to each divided display region of the display panel; and a light source module configured to generate the light toward side surfaces of the respective light guide plates, wherein the light source module includes a plurality of light sources, coupled to the side surfaces of the light guide plates, to generate lights toward the respective light guide plates to correspond to positions of the side surfaces of the light guide plates which are changed according to bends of the light guide plates.

The light source module may include a module board on which the light sources arranged in serial along the side surfaces of the light guide plates are mounted.

The module board may have a flexible material to be bendable to correspond to the positions of the light sources changed according to the bends of the light guide plates.

The light sources may adhere to the side surfaces of the light guide plates.

The light may include light-emitting diodes.

### BRIEF DESCRIPTION OF THE DRAWINGS

The above and other aspects will become more apparent by describing certain exemplary embodiments, with reference to the accompanying drawings, in which:

FIG. 1 is a block diagram showing a display apparatus in accordance with an exemplary embodiment;

FIG. 2 is an exploded perspective view showing the display apparatus shown in FIG. 1;

FIG. 3 is a perspective view partially showing a light guide plate and a light source module in the display apparatus shown in FIG. 2;

FIG. 4 is a plan view showing the light guide plate and the light source module shown in FIG. 3; and

FIGS. 5A, 5B, and 5C are side cross-sectional views showing configuration relationships between a light incidence surface and light sources depending on whether or not a light guide plate is bent.

### DETAILED DESCRIPTION OF EXEMPLARY EMBODIMENTS

Certain exemplary embodiments are described in greater detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters.

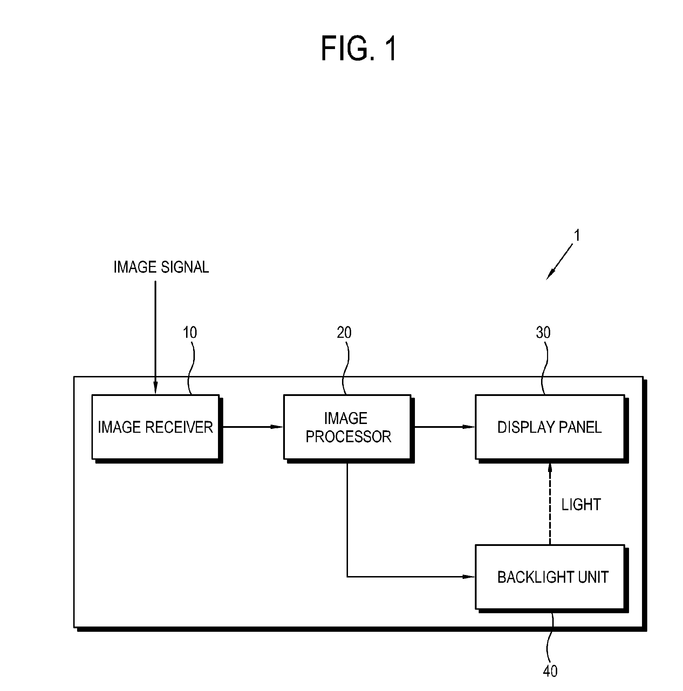

FIG. 1 is a block diagram showing a display apparatus 1 in accordance with an exemplary embodiment. In FIG. 1, a solid line indicates the movement of an image signal or a control signal, and a dotted line indicates the movement of light.

As shown in FIG. 1, in accordance with the exemplary embodiment, the display apparatus 1 may include an image receiver 10 which receives an image signal such as a broadcasting signal, an image processor 20 which processes the image signal received by the image receiver 10, a display panel 30 which displays an image corresponding to the image signal processed by the image processor 20, and a backlight unit 40 which supplies a light such that the image is displayed on the display panel 30.

The image receiver 10 may process signals having various standards. For example, when the display apparatus 1 includes a TV, the image receiver 10 may receive a radio frequency (RF) signal from a broadcasting station (not shown) by wireless communication or an image signal as the composite video, component video, super video, or according to SCART or high definition multimedia interface (HDMI) standard, for example. When the display apparatus 1 includes a computer monitor, the image receiver 10 may receive an image signal according to HDMI, a digital video interactive (DVI), or D-SUB standard, capable of transmitting an RGB signal in a VGA mode, for example.

The image processor 20 may perform various image processing operations on the image signal transferred from the image receiver 10. The types of the image processing operations performed by the image processor 20 are not limited. For example, the image processor 20 may perform a decoding and an encoding of various image formats, a deinterlacing, a frame refresh rate conversion, a scaling, a noise deduction for improving image quality, a detail enhancement, and the like.

The image processor 20 may include individual processing units for independently performing each of the aforementioned processes or a single processing unit for performing the aforementioned processes.

When the backlight unit 40 performs a local dimming, for example, the image processor 20 may transfer corresponding image data to the backlight unit 40. Then, the backlight unit 40 may perform the local dimming based on the image data by controlling a plurality of light sources 210, which are described in detail below, individually or in predetermined groups of the light sources to adjust the brightness.

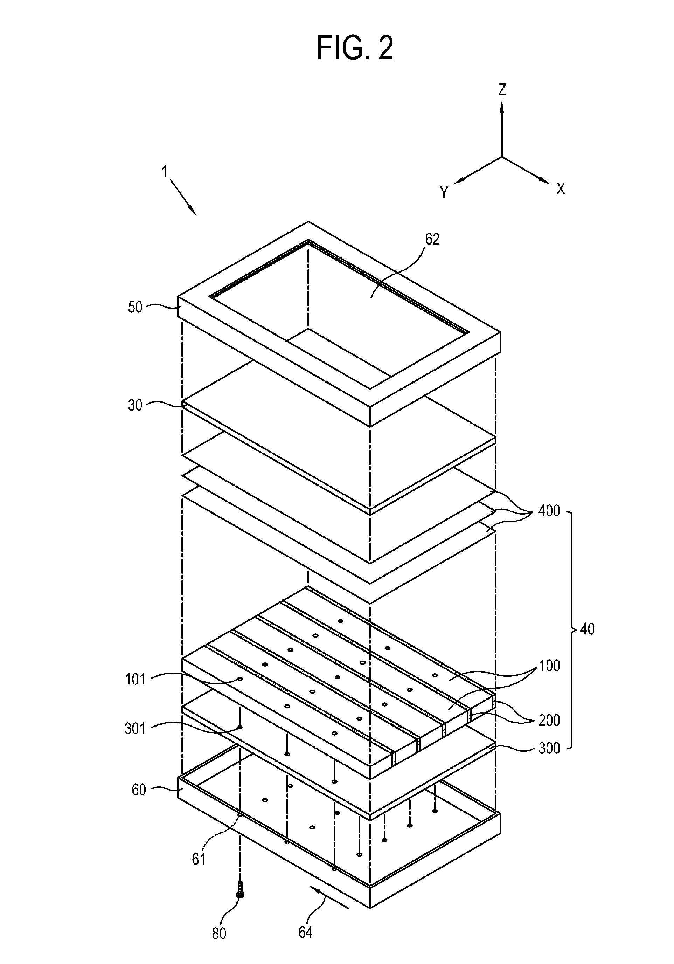

Hereinafter, the structures of the display panel 30 and the backlight unit 40 are described with reference to FIG. 2. FIG. 2 is an exploded perspective view showing the display apparatus 1 shown in FIG. 1.

First, each direction shown in FIG. 2 is described. An X, Y, and Z axes may indicate each of the three-dimensional directions. The display panel 30 may be arranged in parallel to an X-Y plane such that the backlight unit 40 and the display panel 30 are disposed along the Z-axis direction. Hereinafter, the description is provided based on such directional definition. The reverse directions of the X, Y, and Z axes directions are referred to as -X, -Y, -Z axes directions, respectively, and the X-Y plane is a plane formed by the X and the Y axes.

An accommodating space may be formed by an upper cover 50 and a lower cover 60. The display panel 30 and the backlight unit 40 may be accommodated in the accommodating space. An opening 62 may be formed in an outer surface of the upper cover 50 for a display region of the display panel 30.

In accordance with the exemplary embodiment, the display panel 30 may include a liquid crystal panel. In the display panel 30, a liquid crystal layer (not shown) may be interposed between two substrates (not shown). An image may be displayed by controlling a liquid crystal arrangement (not shown) of the liquid crystal layer.

The display panel 30 does not generate the light independently. The light may be supplied from the backlight unit 40 to the display panel 30 to display an image on the display region. Here, the display region, which is a region on which an image is displayed, may be provided substantially parallel to the X-Y plane.

The display panel 30 may include a driving circuit board (not shown). When a driving signal is supplied from the driving circuit board, a liquid crystal (not shown) of the display panel 30 may be rotated at a determined angle. Accordingly, light transmittances may become different per each cell (not shown), thereby forming an image.

The backlight unit 40 may be arranged at a rear side of the display panel 30 to supply light to the display panel 30. The backlight unit 40 may include a plurality of light guide plates 100 which emits light to the display region of the display panel 30, a plurality of light source modules 200 which generates light and injects the generated light into the light guide plates 100, a reflection member 300 which is provided at a rear side of the light guide plates 100 to reflect the light toward the display panel 30, and optical sheets 400 which control an optical characteristic of the light emitted through the light guide plates 100.

The light guide plates 100, which may include plastic molded lenses made of acrylic injection-molded material, for example, may uniformly transfer the light injected by the light source modules 200 to an entire display region of the display panel 30. As shown in FIG. 2, each of the light guide plates 100 may be arranged in the Y-axis direction in an array of rectangular shape plates extending in the X-axis direction. However, the sprit and scope of an exemplary embodiment are not limited by the number, shape, extending direction, arrangement and the like of the array of the light guide plates 100.

Light transmitting patterns may be formed on the light guide plates 100, to thereby improve the uniformity of the light emitted therethrough and adjust the amount of the light. In other words, the amount of the light emitted through the light guide plates 100 may become different depending on how the light transmitting patterns are formed on each respective light guide plate 100.

In the light guide plates 100, a plurality of light guide plate clamping holes 101 is formed at intervals in a lengthwise direction 64. When the display apparatus 1 is assembled, the light guide plate clamping holes 101, reflection member clamping holes 301 disposed on the reflection member 300, and lower cover clamping holes 61 disposed on the lower cover 60, respectively, may be clamped together by screws 80. Accordingly, the light guide plates 100 and the reflection member 300 may be held by the lower cover 60.

The light source modules 200, which generate light to be supplied to the display panel 30, may be provided at side surfaces of the light guide plates 100 to inject the generated light into the light guide plates 100. In other words, the light source modules 200 may extend along the X-axis direction, in a lengthwise direction 64 of the light guide plates 100.

The light generated by the light source modules 200 may be introduced into the respective light guide plates 100 substantially parallel to the X-Y plane. Then, the light may be emitted through the respective light guide plates 100 in the Z-axis direction and transferred to the display panel 30. Accordingly, the display panel 30 may form an image on the display region in parallel with the X-Y plane.

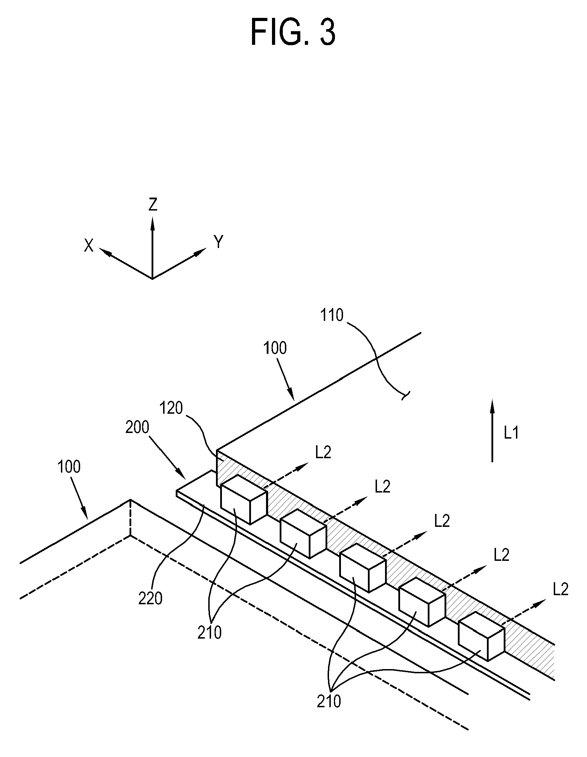

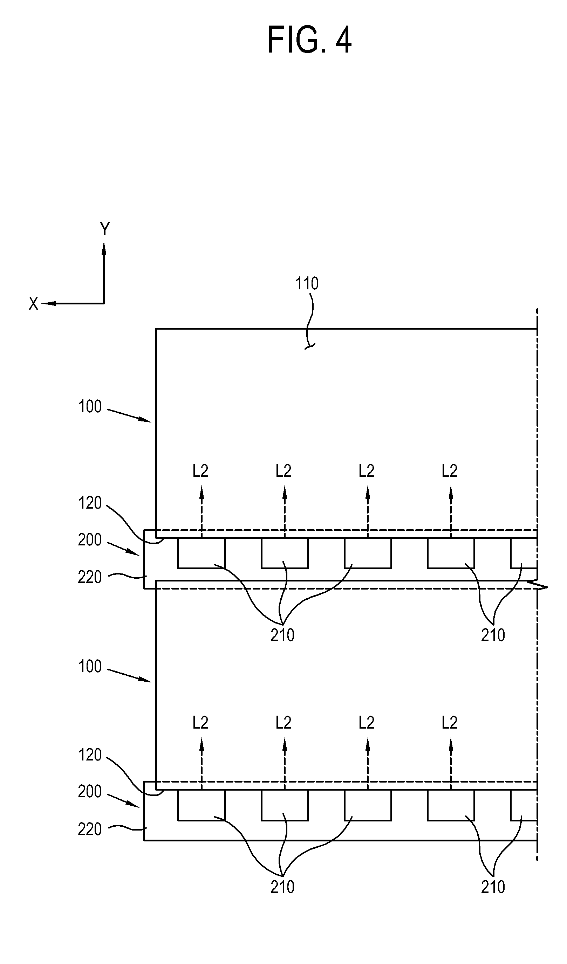

Hereinafter, the structures of the light guide plates 100 and the light source modules 200 are described with reference to FIGS. 3 and 4. FIG. 3 is a perspective view partially showing the light guide plates 100 and the light source modules 200, and FIG. 4 is a plan view partially showing the light guide plates 100 and the light source modules 200 shown in FIG. 3 when viewed in the -Z-axis direction. In FIG. 3, the light guide plates are spaced with each other apart to illustrate the exemplary embodiment. However, the actual distance between the light guide plates may be smaller or greater than illustrated in FIG. 3.

As shown in FIGS. 3 and 4, each of the light guide plates 100 having rectangular shapes may include a light emitting surface 110 from which light L1 is emitted, and a light incidence surface 120 on which the light L2 is incident.

The light emitting surface 110, which is an upper plate surface of the light guide plate 100 that faces a rear surface of the display panel 30, may extend along the X-Y plane. In other words, the light emitting surface 110 may be substantially parallel to the display panel 30. The light that is incident on the light guide plate 100 may be transferred to the optical sheet group 400 and the display panel 30 through the light emitting surface 110.

The light incidence surface 120, which is a side surface of the light guide plate 100, may extend along the X-Z plate, substantially perpendicular to the light emitting surface 110. The light L2 generated by the light source module 200 may be incident on the light incidence surface 120. The incident light L2 may pass through an inner portion of the light guide plate 100 to be emitted as light L1 from the light emitting surface 110.

The light source module 200 may include a plurality of light sources 210 arranged in series along the light incidence surface 120 of the light incidence surface 120 in the X-axis direction, and a module board 220 on which the light sources 210 are mounted.

In accordance with the exemplary embodiment, the light sources 210 may include LEDs. An on/off control signal and driving power may be supplied from the module board 220 to the light sources 210. A light-emitting direction may be adjusted depending on how the light sources 210 are mounted on the module board 220. In accordance with the exemplary embodiment, the light sources 210 may be mounted on the module board 220 such that the direction in which the light L2 is generated is the Y-axis direction, toward the light incidence surface 120.

The light sources 210 mounted on the module board 220 may include at least one of a blue LED, a green LED, and a red LED. In accordance with the exemplary embodiment, blue light, green light, and red light generated from blue, green, and red LEDs may be combined, thereby generating white light. In addition, a white LED may be provided to generate white light.

The light sources 210 may generate heat which may cause the deformation of the light guide plate 100. Of course, the heat generated from an inside of the display apparatus 1 may not be caused only by the heat generated from the light sources 210.

The light guide plate 100 may be held by using the screw 80 as described above. If the heat transferred to the light guide plate 100 is greater than a threshold value, a portion of the light guide plate 100 that is not held by using the screw 80 may be bent.

The bending of the light guide plate 100 may cause a position of the light incidence surface 120 to be changed to form a bend at a lower surface which is opposite the light emitting surface. At this time, if each of the light sources 210 maintains its original position, a bending portion of the light incidence surface 120 may deviate from a light generating position of the light sources 210 by a distance. Accordingly, some individual light signals generated by the light sources 210 may leak into the bent lower surface of the light guide plate 100, instead of being incident on the light incidence surface 120.

For that reason, the light-emitting light amount may be locally reduced at a portion of the light emitting surface 110, thereby causing the brightness of an image to be locally lower at a corresponding portion in the display region of the display panel 30.

Therefore, in accordance with the exemplary embodiment, each of the light sources 210 may generate the light L2 to the light guide plate 100 by being coupled on the side surface, i.e., the light incidence surface 120, of the light guide plate 100 by using an adhesive or the like. Accordingly, even if a position of the light incidence surface 120 is changed from a prior position because of the bending of the light guide plate 100, it is possible to prevent the image brightness from being locally lowered, to thereby secure the image quality.

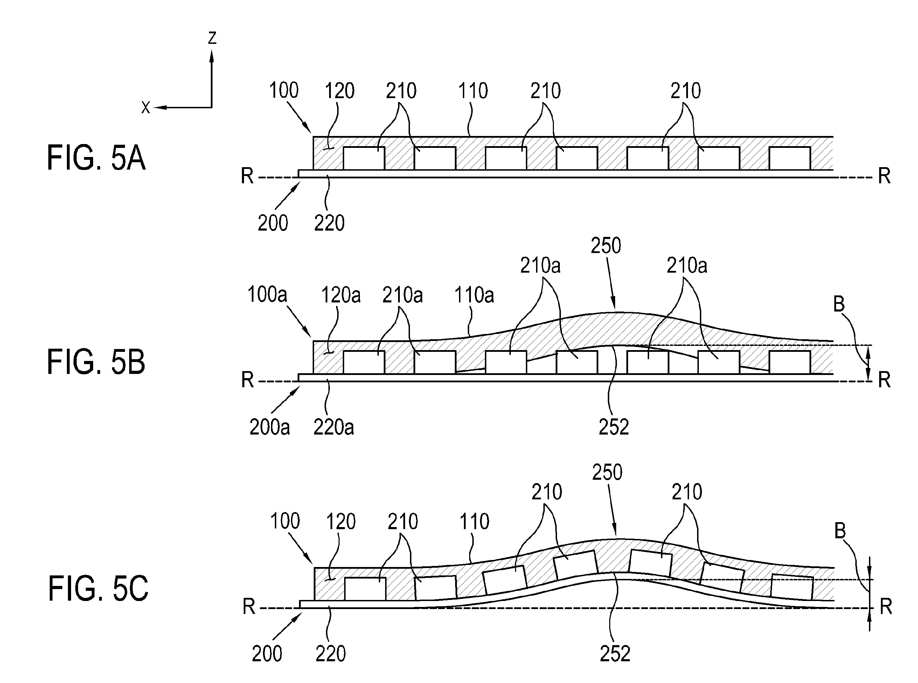

Hereinafter, examples showing light generated by the light sources 210 and incident on the light guide plate 100 depending on a position of the light incidence surface is described with reference to FIGS. 5A to 5C. FIGS. 5A to 5C are side cross-sectional views showing configuration relationships between the light incidence surface 120 and the light sources 210 depending on whether or not a light guide plate is bent.

FIG. 5A shows the configurational relationship when the light guide plate 100 is not bent. The light incidence surface 120 may extend along a predetermined reference line R substantially parallel to the X-axis direction. Each of the light sources 210 may be arranged on the module board 220 along the light incidence surface 120. The light generated by each individual light source 210 may be incident on the light incidence surface 120 to be emitted from the light emitting surface 110 in the Z-axis direction to reach a corresponding display portion of the display panel.

In this case, since the amount of the light introduced from each of the light sources 210 to the light incidence surface 120 is substantially identical per each light source 210, the amount of the light emitted from the light emitting surface 110 may be uniform over the light emitting surface 110. Accordingly, in this case, the brightness is not locally lower in some display regions of the display panel 30 as compared to others.

FIG. 5B shows a light guide plate 100a which is bent. In this example, light sources 210a are not coupled to a light incidence surface 120a. A bending portion 250 of the light incidence surface 120a between the light emitting surface 110a and a lower surface 252 may deviate from the reference line R along the X-axis direction to form a bend having a width B in the Z-axis direction, with regard to the reference line R.

Because the light sources 210a are not coupled to the light incidence surface 120a, a relative position of the light sources 210a corresponding to a bending portion 250 of the light incidence surface 120a may deviate from the reference line R. For that reason, at least some of the light generated from the light source 210a may leak into a lower surface 252 of the light guide plate 100a, instead of being incident on the light incidence surface 120a.

As a result, the amount of the light introduced into a corresponding portion of the light incidence surface 120a may be reduced as compared with an example shown in FIG. 5A. For that reason, the amount of the light emitted from a light emitting surface 110a may be locally reduced, thereby causing the brightness to be lower in some display regions of the display panel.

However, in accordance with the exemplary embodiment, such a problem may be prevented as shown in FIG. 5C.

FIG. 5C shows the bent light guide plate 100 with each of the light sources 210 coupled to the light incidence surface 120.

If there is a bend having the width B with regard to the reference line R in the light guide plate 100, a position of the bending portion 250 of the light incidence surface 120 may be changed corresponding to the bend. But, since the respective light sources 210 are coupled to the light incidence surface 120, the positions of the light sources of the bending portion 250 may also be changed and moved in the Z-axis direction to correspond to the changed position of the light incidence surface.

For example, the module board 220 on which the respective light sources 210 are mounted may have a flexible material, thereby being bendable to correspond to individually changed positions of the respective light sources 210.

As such, when the light guide plate is bent, the relative positional relationship between the light incidence surface 120 and the light sources 210 may be maintained by adjusting the positions of the light sources 210 to correspond to the changed positions of the light incidence surface 120.

Accordingly, even though the light guide plate 100 is bent, the brightness is not locally lower in some display regions of the display panel 30 as compared to others.

In accordance with an exemplary embodiment, when the light guide plates 100 are bent, it is possible to prevent the brightness from being locally lowered in an image displayed on the display panel 30, by coupling the light sources 210 to the side surfaces of the light guide plates 100, respectively, in the backlight unit 40 of the display apparatus 1 with the light sources 210 being arranged at side surfaces of the light guide plates 100.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
an image receiver configured to receive an image signal;
an image processor configured to process the image signal received by the image receiver;
a display panel configured to display an image based on the image signal processed by the image processor;
a plurality of light guide plates configured to output light to corresponding display regions of the display panel; and
a light source module configured to generate and transmit the light toward side surfaces of the light guide plates,
wherein the light source module comprises a plurality of light sources, coupled to the side surfaces of respective light guide plates, to generate the light toward the respective light guide plates at corresponding positions of the side surfaces of the light guide plates which are changed from prior positions according to bends of the light guide plates.

2. The apparatus of claim 1, wherein the light source module further comprises:
a module board on which the plurality of light sources arranged in series along the side surfaces of the light guide plates is mounted.

3. The apparatus of claim 2, wherein the module board comprises a flexible material that is bendable to correspond to positions of the plurality of light sources that are changed according to the bends of the light guide plates.

4. The apparatus of any preceding claim, wherein the plurality of light sources adheres to the side surfaces of the respective light guide plates.

5. The apparatus of any preceding claim, wherein the plurality of light sources comprises light-emitting diodes.

6. A backlight unit for supplying light to a display panel, the backlight unit comprising:
a plurality of light guide plates configured to output light to corresponding display regions of the display panel; and
a light source module configured to generate and transmit the light toward side surfaces of the light guide plates,
wherein the light source module comprises a plurality of light sources, coupled to the side surfaces of respective light guide plates, to generate the light toward the respective light guide plates at corresponding positions of the side surfaces of the light guide plates which are changed from prior positions according to bends of the light guide plates.

7. The backlight unit of claim 6, wherein the light source module further comprises:
a module board on which the plurality of light sources arranged in series along the side surfaces of the respective light guide plates is mounted.

8. The backlight unit of claim 7, wherein the module board comprises a flexible material that is bendable to correspond to the positions of the plurality of light sources which are changed according to the bends of the light guide plates.

9. The backlight unit of any one of claims 6 to 8, wherein the plurality of light sources adheres to the side surfaces of the respective light guide plates.

10. The backlight unit of any one of claims 6 to 9, wherein the plurality of light sources comprises light-emitting diodes.

11. A light unit for a display panel, the light unit comprising:
a light guide plate, disposed substantially parallel to the display panel, which outputs light to a corresponding display region of the display panel and includes:
a light emitting surface which extends substantially parallel to the display panel and outputs light to the display panel and a lower surface opposing the light emitting surface, and
a light incidence surface which extends in a lengthwise direction of the light guide plate between and substantially perpendicular to the light emitting
surface and the lower surface; and
light sources which are affixed to and inject light into the light incidence surface of the light guide plate.

12. The light unit of claim 11, further comprising:
a board, positioned substantially parallel to and proximate the lower surface, on which the light sources are disposed at respective positions with respect to a reference line extending in an X-axis direction.

13. The light unit of claim 12, wherein the positions of the light sources, affixed to the incidence surface, deviate substantially perpendicular with the respect to the reference line in a Z-axis direction when the light emitting surface and the lower surface deviate with respect to the reference line in the Z-axis direction.

14. The light unit of claim 13, wherein the board includes flexible material and deviates together with the light sources, substantially perpendicular with the respect to the reference line in the Z-axis direction when the light emitting surface and the rear surface deviate with respect to the reference line in the Z-axis direction.
